(19)

Europäisches
Patentamt
European
Patent Office
Office européen
des brevets

(11) **EP 3 531 319 A1**

(12) **EUROPEAN PATENT APPLICATION**

(43) Date of publication:
**28.08.2019 Bulletin 2019/35**

(51) Int Cl.:
***G06F 17/50*** *(2006.01)*

(21) Application number: **19158207.1**

(22) Date of filing: **20.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2018 GB 201803103**

(71) Applicant: **Airbus Operations Limited
Bristol BS34 7PA (GB)**

(72) Inventors:
• **PARKES, Philip
Bristol, BS34 7PA (GB)**
• **MEYER, Jonathan
Bristol, BS34 7PA (GB)**

(74) Representative: **Ribeiro, James Michael
Withers & Rogers LLP
4 More London Riverside
London SE1 2AU (GB)**

(54) **METHODLOGY FOR EVALUATING MANUFACTURABILITY**

(57) A method of evaluating build orientations for additively manufacturing an object. Multiple data sets are generated from geometry information indicating a geometry of the object. Each data set indicates variation of a respective associated performance indicator over a design space containing multiple possible build orientations. A composite data set is generated by combining the multiple data sets, along with a representation of the composite data set. The representation of the composite data set graphically illustrates variation of the composite data set over the design space. An image is displaying containing the representation of the composite data set. A user input either selects a set of one or more of the possible build orientations or accepts a preselected set of one or more of the possible build orientations. A solution is output based on the user input.

FIG. 3

EP 3 531 319 A1

**Description**

FIELD OF THE INVENTION

The present invention relates to a method, and associated apparatus and software, for evaluating build orientations for additively manufacturing an object

BACKGROUND OF THE INVENTION

A known software tool for determining a build orientation for additively manufacturing an object is described at https://additive.works/assessment. An Assessment module enables a user to automatically re-orientate the part according to user preferences or to determine potentially good orientations for more detailed analysis. Another known tool for determining optimal orientation is described at http://www.materialise.com/en/software/magics/modules/metal-support-generation-module.

SUMMARY OF THE INVENTION

A first aspect of the invention provides a method of evaluating build orientations for additively manufacturing an object, as set out in claim 1. The method comprises: receiving geometry information indicating a geometry of the object; generating multiple data sets from the geometry information, wherein each data set indicates variation of a respective associated performance indicator over a design space containing multiple possible build orientations; generating a composite data set by combining the multiple data sets; generating a representation of the composite data set, wherein the representation of the composite data set graphically illustrates variation of the composite data set over the design space; displaying an image containing the representation of the composite data set; receiving a user input which either selects a set of one or more of the possible build orientations or accepts a pre-selected set of one or more of the possible build orientations; and outputting a solution based on the user input.

Typically there are a large number of competing performance indicators to consider, for example four or more, typically four to ten. Therefore it can be difficult or impossible for a user to visualise which parts of the design space are likely to be optimal. To solve this problem, a composite data set is generated by combining the multiple data sets. This composite data set is then viewed by a human user via the image, which enables the human user to use engineering knowledge to either select one or more of the possible build orientations, or confirm a pre-selected set of one or more of the possible build orientations.

Optionally the multiple data sets comprise four or more data sets.

In one embodiment, the user input selects one or more of the possible build orientations. For instance the user input may select one or more of the possible build orientations from the image by clicking on the image using a mouse, a touch-sensitive screen, or other user input device.

In another embodiment, the user input accepts a pre-selected set of one or more of the possible build orientations. For instance the pre-selected set of one or more of the possible build orientations may be a global minimum or maximum which is automatically determined by the computer from the composite data set. In this case, displaying the image enables a human user to visualise the composite data set and use engineering knowledge to determine whether the global minimum or maximum automatically determined by the computer is in fact optimal. If so, then the user input accepts the global minimum or maximum. If not, then the user input may select one or more different build orientations using a mouse, a touch-sensitive screen, or other user input device.

The solution is based on the user input. In one example the solution may simply be an indication of the set of build orientations which have been either selected or accepted by the user input. In another example the solution may be a build data file containing geometry information indicating a geometry of the object in a particular build orientation which has been either selected or accepted by the user input.

Combining the multiple data sets typically comprises merging the multiple data sets or generating a logical conjunction of the multiple data sets. Optionally the multiple data sets are combined by scaling and merging the multiple data sets. Optionally the multiple data sets are combined by normalising and merging the multiple data sets.

The representation of the composite data set may be a bi-variate representation (such as a map or polar plot) which graphically illustrates variation of the composite data set over a design space with two variables, or it may be a univariate representation (such as a line plot) which graphically illustrates variation of the composite data set over a design space with only a single variable.

The representation of the composite data set may be a map or a line plot for example. The map may be a binary map, a contour map or a colour-coded heat map.

Optionally the representation of the composite data set illustrates feasible and non-feasible areas of the design space.

Optionally combining the multiple data sets comprises applying a parameter to each of the multiple data sets to generate a respective plurality of modified data sets; and combining the modified data sets to generate the composite data set. The parameters may be obtained by user input or by retrieval from a database.

Optionally the parameters are thresholds, and the modified data sets indicate feasible and non-feasible areas of the design space based on the thresholds.

Optionally the method further comprising perturbing at least one of the thresholds, either by user input or by an automated algorithm, such as a penalty function, so that each of the modified data sets indicates at least one feasible area of the design space.

A further aspect of the invention provides a method of additively manufacturing an object, the method comprising: performing the method of the first aspect; and additively manufacturing the object in accordance with the solution output by the method of the first aspect.

If the solution is an indication of a particular build orientation which has been either selected or accepted by the user input, then typically the particular build orientation is used to generate a build data file which in turn is used to additively manufacture the object. If the solution is an indication of multiple build orientations which have been either selected or accepted by the user input, then typically the multiple build orientations are further interrogated to select a particular build orientation which is then used to generate a build data file which in turn is used to additively manufacture the object. If the solution is a build data file containing geometry information indicating a geometry of the object in a particular build orientation then this can be used directly to manufacture the object.

A further aspect of the invention provides a computer programmed to evaluate build orientations for additively manufacturing an object by a method according to the first aspect.

A further aspect of the invention provides additive manufacturing apparatus comprising: a computer according to the previous aspect; and a machine arranged to receive the solution from the computer and additively manufacture the object in accordance with the solution received from the computer.

A further aspect of the invention provides a computer program which, when loaded into a computer, programs the computer to evaluate a build orientation for additively manufacturing an object by a method according to the first aspect.

A further aspect of the invention provides a method of additively manufacturing an object, the method comprising: receiving a part data file; generating multiple data sets from the part data file, wherein each data set comprises a matrix of performance indicator values each associated with a possible build orientation; generating a composite data set by combining the multiple data sets; displaying an image containing a representation of the composite data set; receiving a user input which either selects part of the composite data set or accepts a pre-selected part of the composite data set; generating a build data file on the basis of the user input; and additively manufacturing the object with the machine in accordance with the build data file.

BRIEF DESCRIPTION OF THE DRAWINGS

Embodiments of the invention will now be described with reference to the accompanying drawings, in which:

Figure 1a is a schematic view of a computer system for producing an object orientation solution;

Figure 1b shows software hosted by the computer system of Figure 1a;

Figure 2 is a schematic view of an additive manufacturing machine;

Figure 3 is a flow diagram of a design process according to a first embodiment;

Figure 4a is a graphical representation of a data set for KPI A;

Figure 4b shows a build platform axis and object axis;

Figure 5 is a graphical representation of a data set for KPI B;

Figure 6 is a graphical representation of a binary data set for KPI A;

Figure 7 is a graphical representation of a binary data set for KPI B;

Figure 8 is a graphical representation of a binary composite data set;

Figure 9 is a graph showing line plots for KPI A and KPI B;

Figure 10 is a flow diagram of a design process according to a second embodiment;

Figure 11 is a flow diagram of a design process according to a third embodiment;

Figure 12 is a flow diagram of a design process according to a fourth embodiment;

Figure 13 is a graphical representation of a normalised data set for KPI A;

Figure 14 is a graphical representation of a normalised data set for KPI B;

Figure 15 is a graphical representation of a normalised and merged data set for KPIs A and B;

Figure 16 is a graphical representation of a hybrid composite data set;

Figure 17 is a graph showing line plots for the normalised data sets for KPI A and KPI B; and

Figure 18 is a graph showing a line plot for the normalised and merged data set for KPIs A and B.

DETAILED DESCRIPTION OF EMBODIMENT(S)

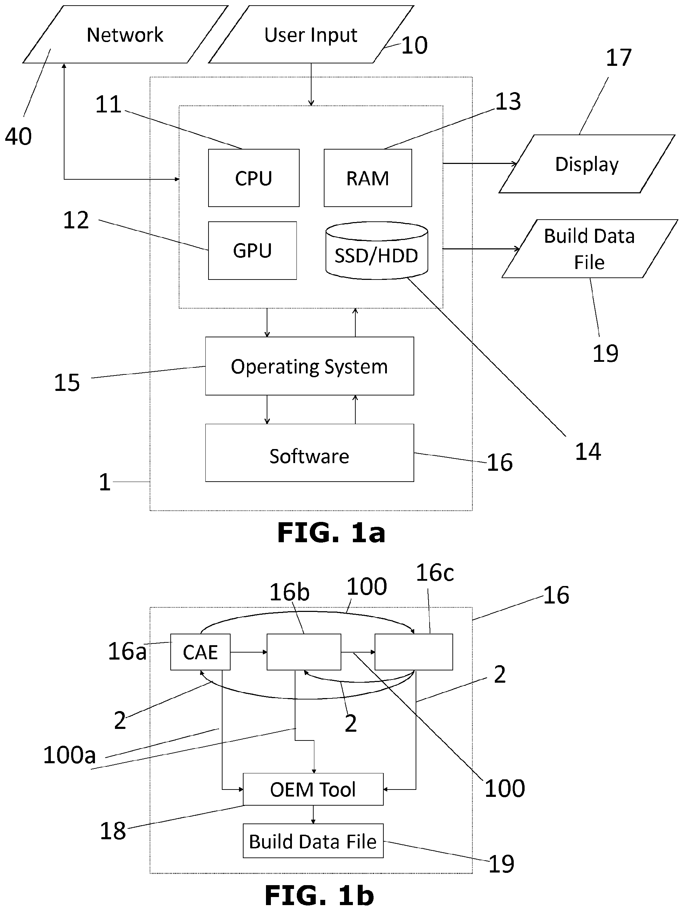

Figure 1a shows a computer 1, such as a PC, comprising a user input device 10 such as a mouse, keyboard or touch-sensitive screen; central processing unit 11; graphic processing unit 12; random access memory 13; solid state or hard disk drive 14; operating system 15; software 16; and display 17.

The software 16 includes various computer programs shown in Figure 1b, including a computer aided engineering (CAE) toolset 16a such as CATIA (TM) or 3DX (TM), and build preparation software 16b such as Materialise Magics (TM) etc. A program 16c is also loaded into the computer 1, and programs the computer 1 to evaluate build orientations for additively manufacturing an object as described in further detail below with reference to the flow diagrams. Note that in this example the programs 16a-c are all hosted on the same computer 1, but in an alternative embodiment they may be hosted on different computers.

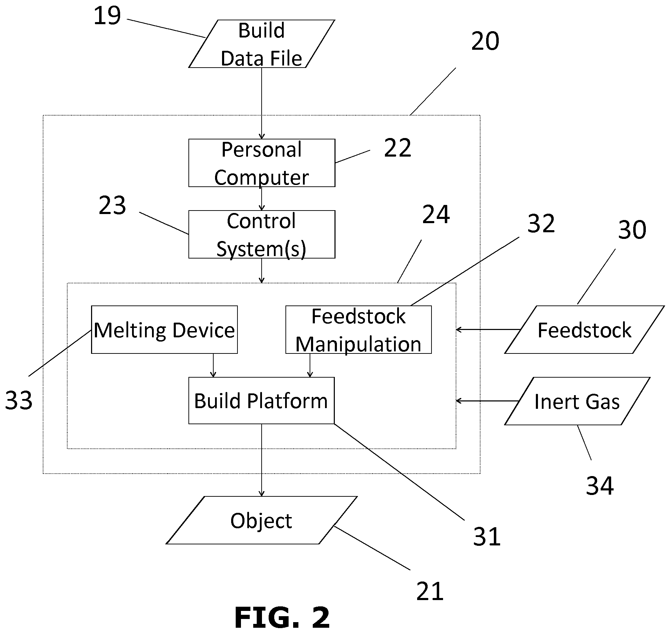

An additive manufacturing machine 20 shown in Figure 2 is arranged to receive a build data file 19 from the computer 1 and additively manufacture an object 21 on the basis of the build data file 19. The machine 20 includes a personal computer 22 and control system(s) 23 which together control the operation of various elements within a build chamber 24. The machine 20 could use powder-bed technology, fuse deposition modelling, or any other additive manufacturing technique. In this example, the machine 20 uses powder-bed technology. A layer of feedstock powder 30 is spread across a build platform 31 by a feedstock manipulation device 32 (such as a roller). The layer of powder is then melted selectively by a melting device 33 such as laser or electron-beam gun, under the control of the control system(s) 23. Inert gas 34 is fed into the chamber during the process. The next layer of powder is then spread across the build platform 30 and the process repeated for that layer. The melted regions of the various layers solidify to form the object 21, which may also include support structures which are removed from the final part during post-processing.

The build data file 19 may be a slice file containing contour information, or a machine file containing tool paths, laser power, laser speed etc. If the build data file 19 is a slice file, then the personal computer 22 converts the slice file into a machine file which can be used by the control system(s) to control the machine 20.

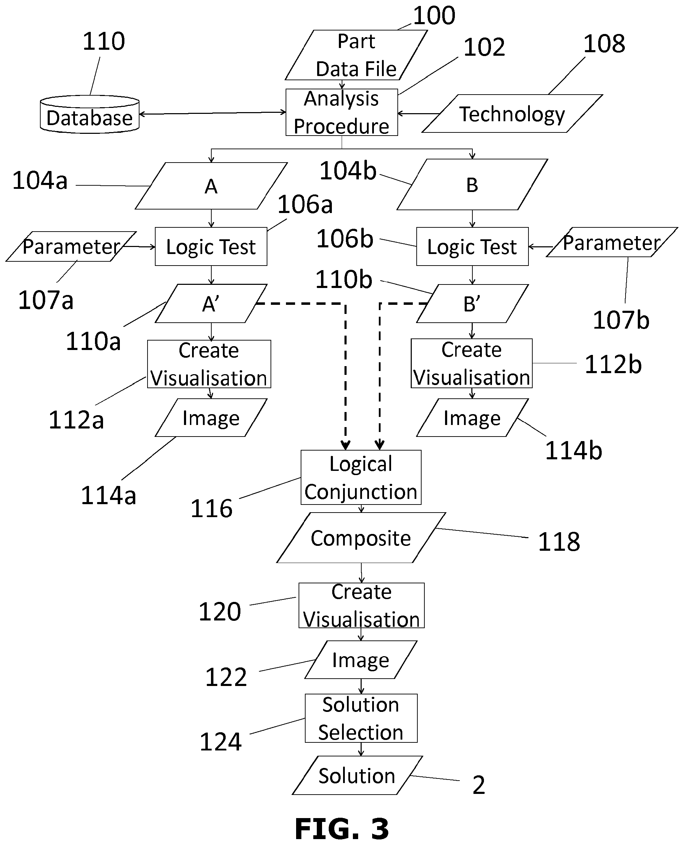

Figure 3 is a flow diagram illustrating a first method, performed by the computer 1 under control of the program 16c, for generating a solution 2 which is used to generate the build data file 19.

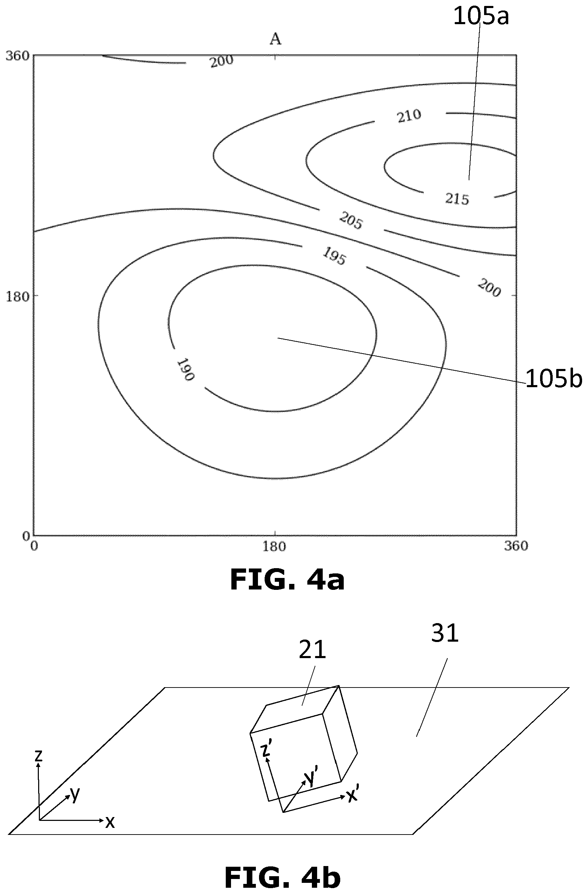

The program 16c receives a part data file 100, either directly from the CAE toolset 16a, or via the build preparation software 16b which performs some preprocessing (e.g. diagnostics of mesh quality, element fixing, etc.). The part data file 100 contains geometry information indicating a geometry of the object in an arbitrary orientation. For instance, with reference to Figure 4b, the part data file 100 may have the object 21 orientated with its axes (x',y,'z') aligned with the coordinate system (x,y,z) of the build platform 31.

The part data file 100 contains a description of the object's surface topology and may be in a number of formats, one example being the stereolithography (STL) file format: a mesh of 2D triangular elements defined by vertex coordinates and surface normals. Additive Manufacturing File Format (AMF), 3D Manufacturing Format (3MF), finite-element meshes (e.g. INP format), meshes of quad elements or even native Computer Aided Design (CAD) are alternative formats for the part data file 100.

In an analysis procedure 102 the computer 1 generates multiple competing key performance indicator (KPI) data sets 104a,b from the part data file 100. Each KPI data set indicates variation of a respective associated KPI over a design space containing multiple possible build orientations. In this example only two KPI data sets 104a,b are illustrated, but in general the number of KPI data sets may be much higher, typically between four and ten. Examples of suitable KPIs are: object height, bounding box, support requirement (surface and volume), cross-sectional area, local minima, bridging (convergence of features).

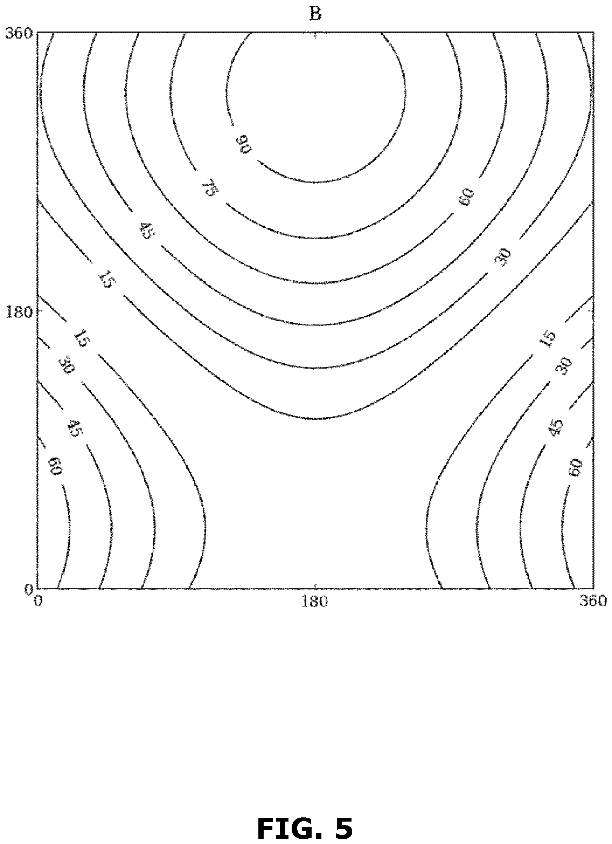

The program 16c generates a representation of each KPI data set, the representation of the KPI data set graphically illustrating variation of the KPI data set over the design space. The display 17 displays multiple images, each containing a representation of a respective KPI data set. Figure 4a is an example of a representation of the KPI data set 104a, and Figure 5 is an example of a representation of the KPI data set 104b. In this case each representation is a contour map with the contour labelled with the value of the KPI for that contour. The X-coordinate of each point on the contour map indicates the X-rotation of the build orientation relative to the build platform 31, and the Y-coordinate indicates the Y-rotation of the build orientation relative to the build platform 31. In the example of Figure 4, the KPI A has a maximum at a point 105a in the design space, with coordinates (313°, 278°). At this point in the design space the object is rotated by 313° about the x-axis of the build platform and by 278° about the y-axis of the build platform. The KPI A has a minimum at a point 105b in the design space.

Rotation about the z-axis is significantly less important as this does not change the object's cross-sectional area (layer-wise) or support requirement. It does vary the object's form with respect to the gas flow and powder recoating directions but these are considered to be second order factors for selection of build orientation.

The analysis procedure 102 is an algorithm with two parts: a rotation process and a KPI calculation process.

The rotation process rotates the part data file 100 to generate a set of multiple possible build orientations, the full set of possible build orientations constituting a design space. One-off operations such as mesh scaling, translation (to positive quadrant of Cartesian co-ordinate system) are prerequisites to starting the rotation process. Object surface area and volume are also calculated. These types of procedures are undertaken automatically when a user selects and imports the part data file 100. Each element of the mesh is re-orientated using a rotation matrix, and new data stored in the RAM 13. The rotation matrix simultaneously applies two extrinsic rotations: firstly about the X-axis of the build chamber and then about the Y-axis of the build chamber. This orientation forms a single sampling point within the design space.

Additional rotations and analyses are undertaken in parallel until the design space is sampled to the desired resolution. Typically 5 degree increments are used in both X and Y axes from 0 to 355 degrees inclusive, giving a total of 5184 orientations. Alternatively increments of 1 degree in each axis could be used (130,000 orientations).

Optionally one dimension only needs to be sampled from 0 to 180 degrees in order to prevent generation of some duplicate solutions.

Once rotated, the mesh is then analysed in the KPI calculation process to determine various manufacturability KPIs at each sampling point of the design space. The algorithms used in the KPI calculation process can fall into two distinct categories: 1) using raw mesh data; or 2) using data generated by "slicing" of the mesh (sectioning the part layer-wise to form contours). The output of the KPI calculation process is a collection of KPI data sets. Each KPI data set contains a matrix of KPI values, showing how the KPI varies across the design space.

The KPI calculation process needs to know the nature of the technology being used by the machine 20 (for instance powder-bed technology, fuse deposition modelling, feedstock, melt theme etc). This technology is input at 108 and may be provided by the user input device 10, or could be automatically detected if the computer 1 is linked to a particular machine 20. A data base 110 (stored on RAM 13, SSD/HDD 14, or even a remote server) stores information in one or more look-up-tables (LUT). The information stored on the data base 110 describes how KPIs vary with different technologies. The analysis procedure 102 receives information 108 about the technology and queries the database 110 for information about the KPI(s) being analysed. The analysis procedure 102 receives information from the data base 110 which is then used to analyse the mesh, as described above.

Next a logic test 106a,b is applied to each KPI data set 104a,b on the basis of a respective parameter 107a,b. In this example, the logic test 106a,b tests whether the KPI is less than a threshold set by the parameter 107a,b. The parameters 107a,b are defined by user input via the input device 10 and display 17 - for instance by adjusting sliders in a graphical user interface (GUI).

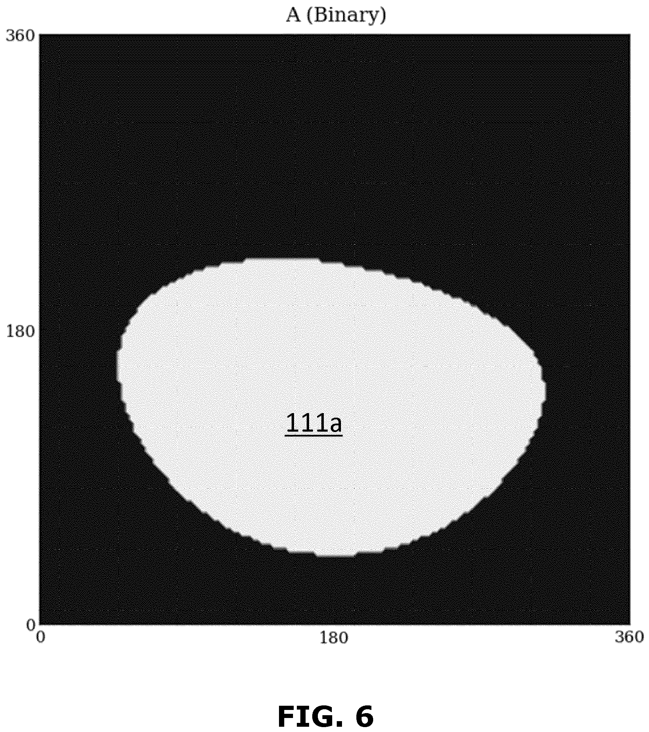

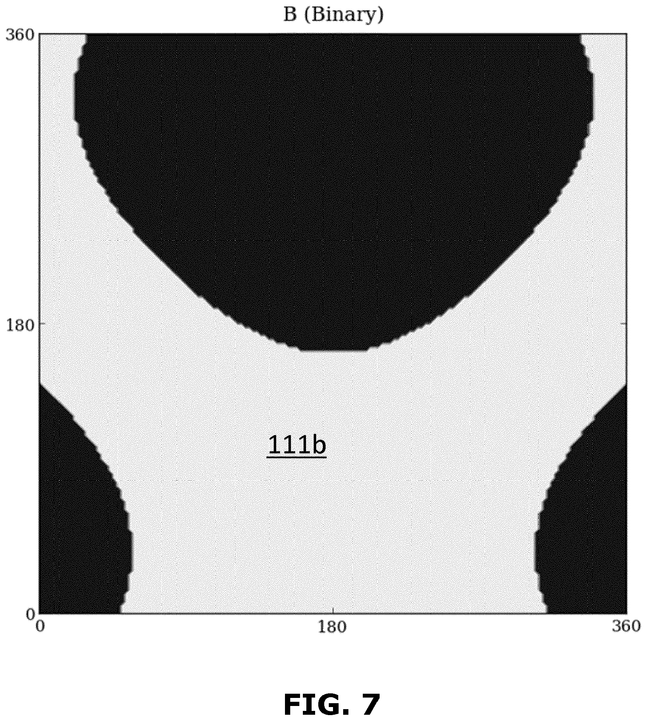

If the KPI is less than the threshold, then the logic test outputs a logical "1", otherwise it outputs a logical "0". The outputs of the logic test 106a,b are binary data sets 110a,b. At steps 112a,b the program 16c generates a representation of each binary data set 1 10a,b, the representation of the binary data set graphically illustrating variation of the binary data set over the design space, then at steps 114a,b the display 17 outputs associated images illustrated in Figure 6 and 7 respectively. The image of Figure 6 is a map showing a white area 111a containing feasible build orientations in which the KPI A is less than a threshold of 195, and the image of Figure 7 is a map showing a white area 111b containing feasible build orientations in which the KPI B is less than a threshold of 40. The black areas show non-feasible orientations in which the KPI is greater than the threshold.

In this example, the parameters 107a,b set respective thresholds for the two KPIs, and the binary data sets 110a,b indicate feasible and non-feasible areas of the design space based on the thresholds. In the more general case, some other parameter may be applied to each of the multiple KPI data sets 104a,b to generate a respective plurality of modified data sets 110a,b which may or may not be binary data sets.

The binary maps of Figures 6 and 7 are displayed simultaneously on the display 17 at steps 114a,b, and give a rough indication of feasible orientations. However, if there are a large number of KPIs to consider, then it can be difficult or impossible for a user to visualise which parts of the design space are likely to be optimal.

To solve this problem, a binary composite data set 118 is generated by combining the multiple binary data sets 110a,b by a logical conjunction 116. Specifically, the binary data sets 110a,b are combined by a logical AND function to give the binary composite data set 118, which is a binary matrix.

Next a representation of the binary composite data set 118 is generated at step 120, the representation of the binary composite data set 118 graphically illustrating variation of the binary composite data set over the design space; and at step 122 an image is displayed on the display 17 containing the representation of the binary composite data set 118.

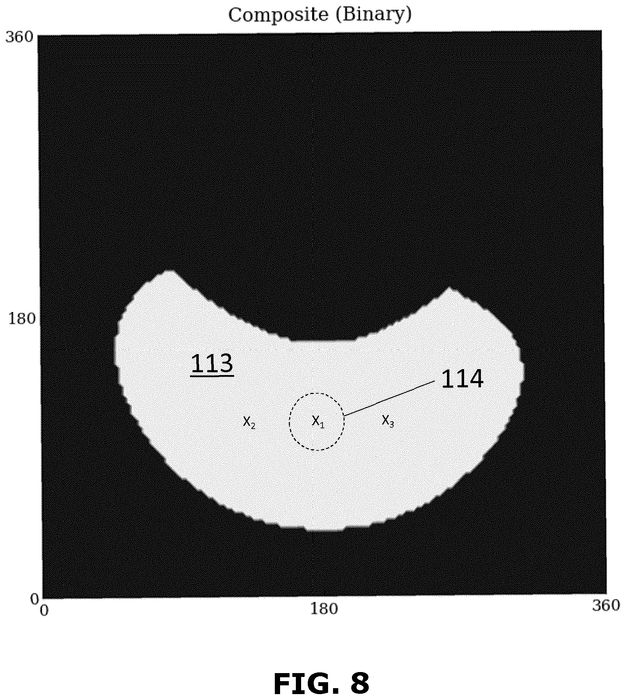

Figure 8 is an example of the binary image displayed at step 122. The image of Figure 8 is a map showing a white area 113 containing feasible build orientations in which both of the KPIs A and B are less than their respective threshold. The black area shows non-feasible orientations in which one or both of the KPIs is greater than its respective threshold.

After displaying the image of Figure 8, the computer 1 receives a user input which selects one or more of the possible build orientations from the image - in other words it selects part of the composite data set. So for example if the user input device 17 is a mouse, then at step 124 the user might use the mouse to click on a point $X_1$ in the centre of the white area 113 of the image. This selects one of the possible build orientations which is output as the solution 2.

In this example the solution 2 output by the program 16c is an indication of a single particular build orientation $X_1$. This particular build orientation $X_1$ is then used to generate a build data file 19 which in turn is used to additively manufacture the object. As shown in Figure 1b, this solution 2 may be input to either the CAE toolset 16a or the build preparation software 16b. By way of example, the solution 2 input to either the CAE toolset 16a or the build preparation software 16b may indicate a new orientation of the axes x',y',z' shown in Figure 4b. The CAE toolset 16a or the build preparation software 16b then outputs a rotated part data file 100a to an Original Equipment Manufacturer (OEM) tool 18 which generates the build data file 19 used by the additive manufacturing machine 20 shown in Figure 2. The OEM tool 18 could be an embedded plugin or a stand-alone application.

Alternatively the solution 2 output by the program 16c may be a rotated version of the part data file, such as an STL file, containing geometry information indicating a geometry of the object in a single particular build orientation. In this case the STL file of the object in the particular build orientation is output directly to the OEM tool 18 by the program 16c as shown in Figure 1b.

In an alternative embodiment, the solution 2 output by the program 16c may indicate a set of multiple build orientations rather than only a single particular build orientation $X_1$. An example of this is shown in Figure 8. A user in this case may either individually select a set $X_1$, $X_2$, $X_3$ of multiple possible build orientations which are output together as the solution 2, or the user may use a drawing tool to define a region indicated by dashed line 114 containing a set of multiple possible build orientations which are output together as the solution 2. In this case, the set of multiple build orientations are further interrogated to select a particular build orientation which is then used to generate the build data file 19 which in turn is used to additively manufacture the object. This further interrogation may be performed by the software 16c, or by other software tools (for instance the CAE tool set 16a, the build preparation software 16b or an external analysis tool accessed via a network 40).

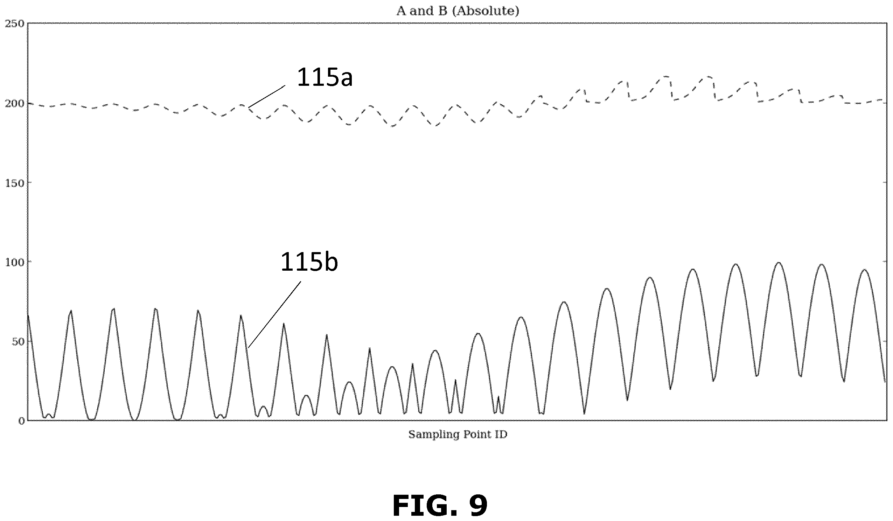

In the examples of Figures 4-8, the various data sets are displayed as maps, but other graphical illustration techniques are possible. Figure 9 gives an example in which the KPI data set 104a is indicated by a line plot 115a and the KPI data set 104b is indicated by a line plot 115b. The maps of Figures 4-8 are bi-variate representations whereas the line plot of Figure 9 is a univariate representation.

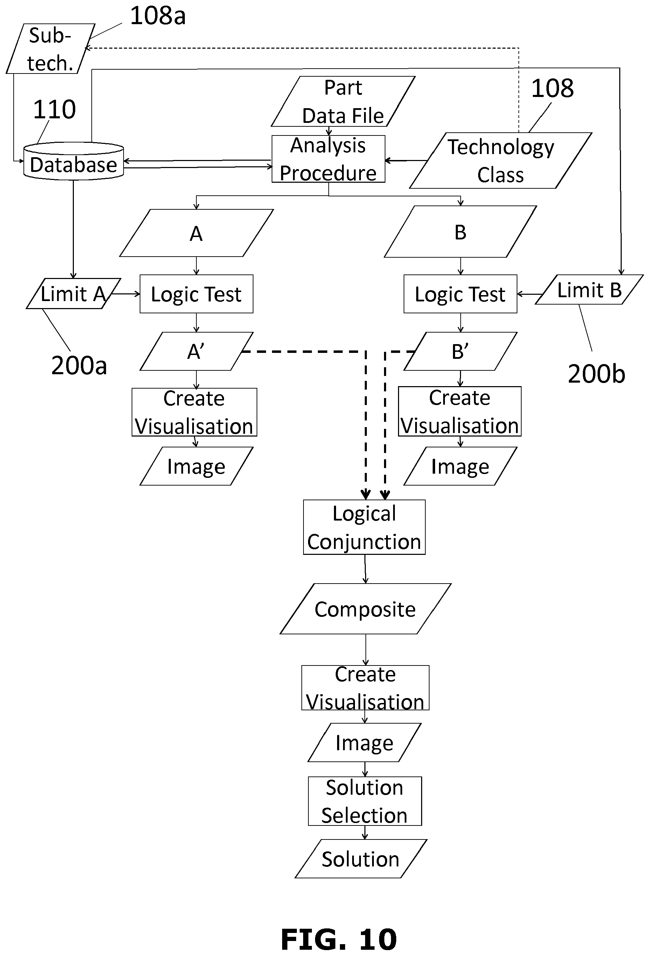

Figure 10 shows a modified process which is mostly identical to Figure 3, so only the differences will be described. In the example of Figure 3 the parameters 107a,b are user defined, but in the process of Figure 10 pre-defined parameters 200a,b from the database 110 are used.

The pre-defined parameters 200a,b are defined by the database 110 which contains empirical data coupled to a specific technology as selected at 108, and also by a sub-technology selected at 108a. By way of example, if the parameter 200a is the maximum cross-sectional area of any individual geometric feature, then in the case of a powder-bed laser-beam technology using feedstock Ti6Al4V then the parameter 200a from the database 110 may be 2000mm$^2$; and in the case of a powder-bed electron-beam technology using feedstock Ti6Al4V then the parameter 200a from the database 110 maybe 10,000mm$^2$.

A user first selects a technology class 108 such as powder-bed technology or fuse deposition modelling. This choice of technology 108 then determines a possible set of sub-technologies (for instance feedstock, machine). The sub-technologies are selected at 108a and determine the pre-defined parameters 200a,b output from the database 110.

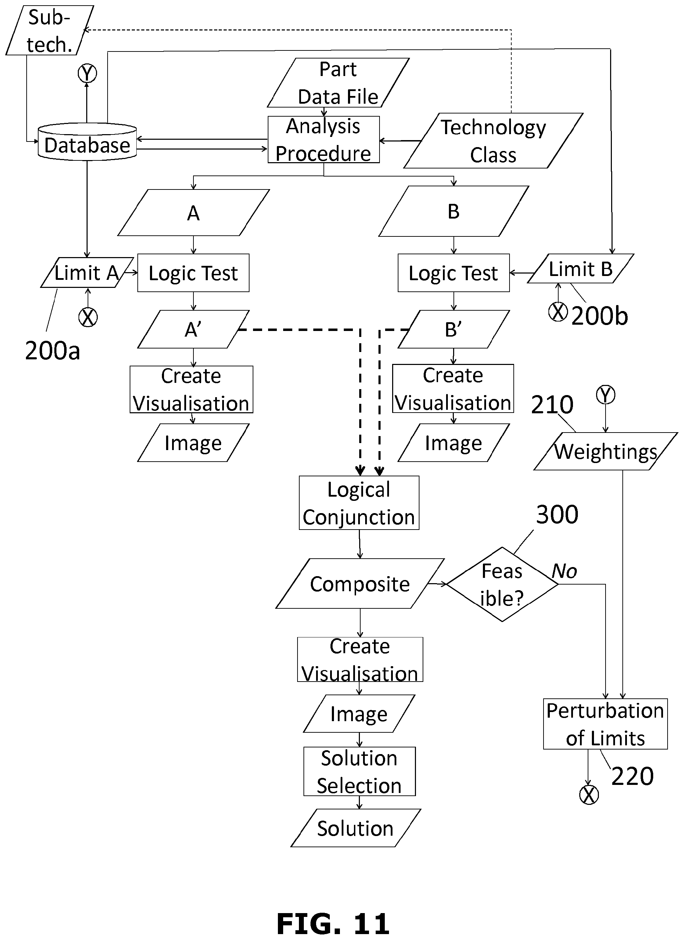

In the examples above, it is assumed that the binary composite data set 118 contains some feasible solutions - in other words at least one white area in the image of Figure 8. This may not always be the case, so in the example of Figure 11 the computer 1 determines at step 300 whether there are any feasible solutions, and if not it implements a penalty function. The penalty function perturbs the limits 200a,b at step 220 so that the binary composite data set 118 contains some feasible solutions.

An example of a suitable perturbation is:

$$L_a^N = (L_a - Amin)/(Amax - Amin)$$

$$\Delta_a = \delta_a - L_a^N \quad \text{where} \quad 0.0 \leq \delta_a \leq 1.0$$

$$E = \tfrac{1}{2} k_a \Delta_a^2 + \tfrac{1}{2} k_b \Delta_b^2 + \cdots$$

Minimise E whilst ensuring there is a feasible solution on composite map

In the example above, $L_a^N$ is the normalised limit on KPI data set 104a. $L_a^N$ is found by taking the limit 200a and subtracting the minimum point 105b on the KPI data set, then dividing that by the difference between the maximum point 105a on the KPI data set 104a and the minimum point 105b on the KPI data set 104b. The normalised limit 200a, $L_a^N$, will therefore be a value between 0 and 1 inclusive.

The normalised limit, $L_a^N$, is perturbed to a new normalised limit, $\delta_a$. The new normalised limit $\delta_a$ is constrained to only have a value between 0 and 1 inclusive. The change in KPI data set 104a is defined as $\Delta_a$: the difference between $L_a^N$ and $\delta_a$.

The limits set for each different KPI data set 104a,b define optimal limits. For this reason any point beyond these limits negatively affect the manufacture. Depending on the technology 108 some KPIs might be more important than others. For this reason weightings 210, $k_a$, $k_b$, for each KPI data set 104a,b are applied. Some KPIs might also degrade the object to be manufactured faster than other KPIs for the same perturbation.

The equation is best understood when thinking about the energy, E, of the system. The energy, E, of one KPI data set (104a or 104b) can be modelled like the energy in a spring system, wherein the energy equation above has a KPI data set 104a weighting 210, $k_a$ (like a spring constant), and a change in KPI data, $\Delta_a$ (like a change in string length).

The zero energy is defined as the system energy when there is no perturbation from the limits 200a,b (i.e. $\delta_a = L_a^N$). Any perturbation of KPI data sets 104a,b will therefore cause the energy to rise or fall. At the zero energy there is no feasible solution, it is therefore necessary to raise the energy, E, of the system. This is done by perturbing $\delta_a$ and $\delta_b$ (and $\delta$ for any other KPI data sets). Therefore, to find the optimal solution, minimise E, whilst ensuring there is a feasible solution on composite map. Step 220 performs this algorithm and edits the limits 200a,b with the new limits that produce the minimum system energy, E.

A simplistic prioritisation of three KPIs for two different technologies is shown below in Table 1. The prioritisation will determine how the stiffnesses in the penalty function are chosen.

**Table 1**

| Machine Type | Material | Support Requirement | Cross-Sectional Area (CSA) | XY-Projection |
|---|---|---|---|---|
| Electron-beam (EB) | Titanium | Medium | Low | Low |
| Laser-beam (LB) | Titanium | High | Very High | High |

EB machines can use floating supports so high support requirement does not always equate to high support volume and increased build time/cost. EB is a hot process so large cross-sections do not tend to result in part distortion. Conversely, CSA and distortion is the primary concern for cold LB processes. Finally, the area the object projects onto the XY-plane influences the number of objects that can be fitted into a build. This is less of a factor for EB as parts can be nested vertically due to the ability to use floating supports. LB parts tend to have supports that connect to the build platform.

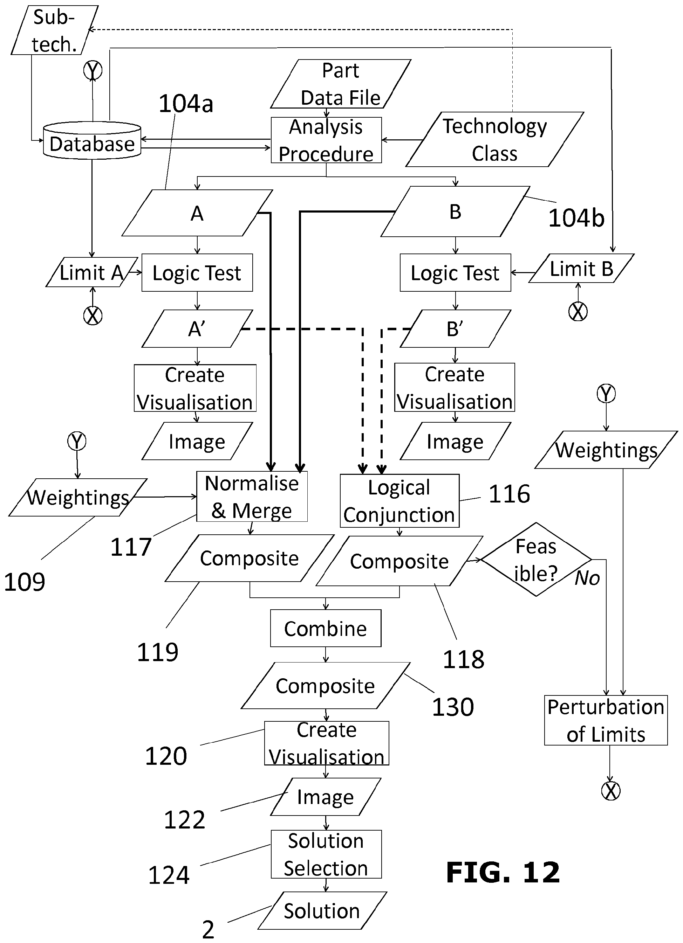

In the example of Figure 12, the KPI datasets 104a,b are not only combined by logical conjunction 116 to generate a binary composite data set 118, but also combined by normalising and merging at step 117 to generate a normalised and merged composite data set 119.

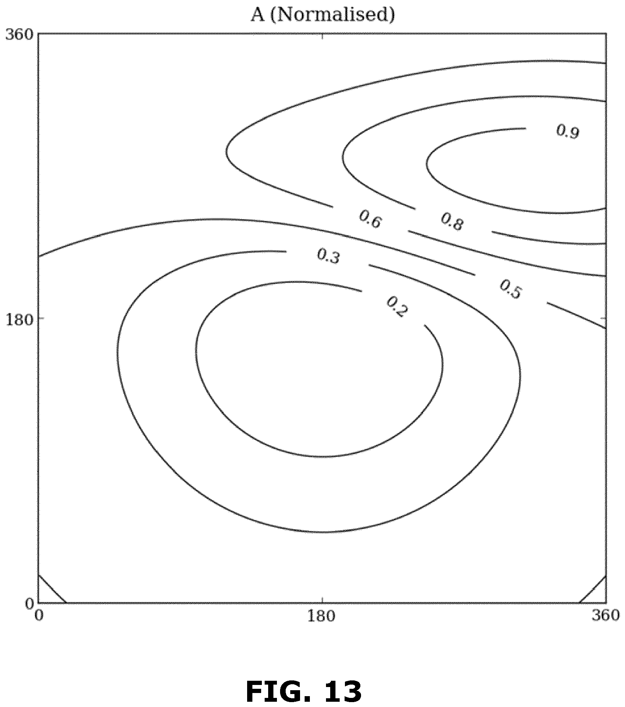

Figures 13-15 illustrate how the normalised and merged composite data set 119 of Figure 12 is generated.

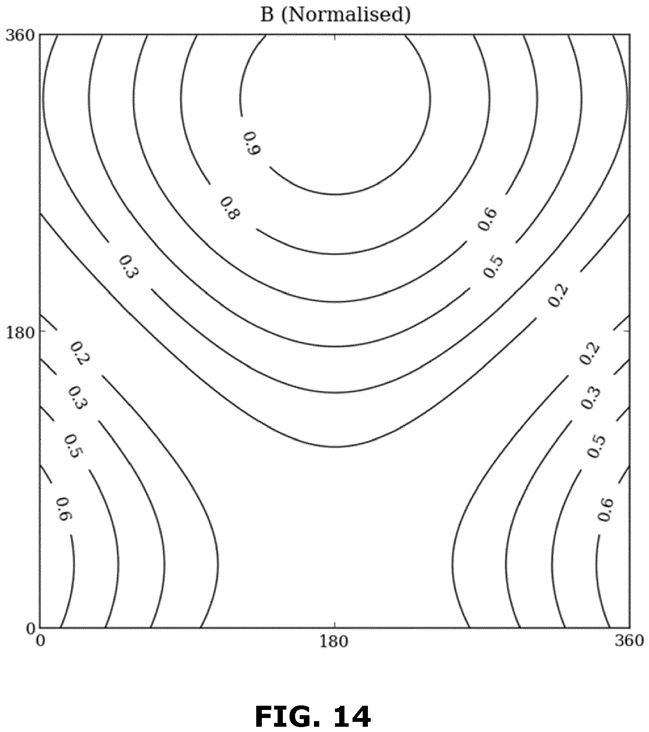

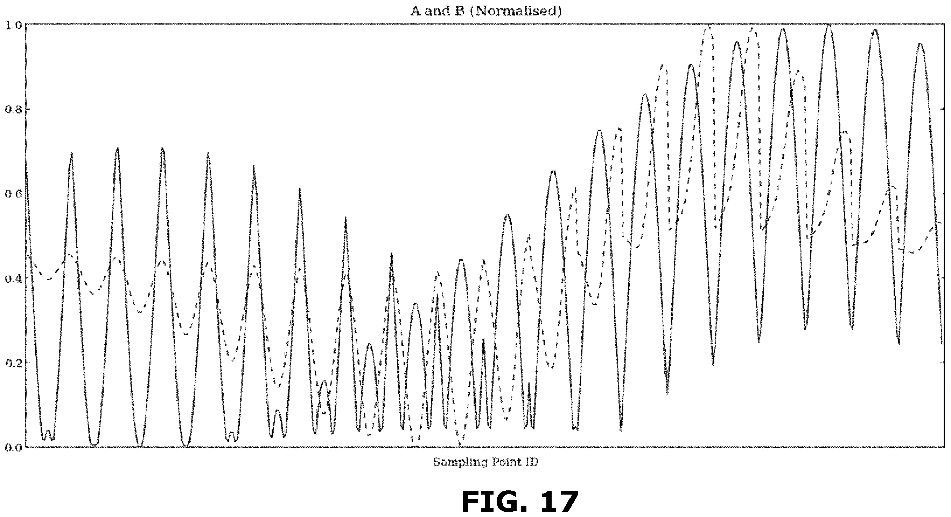

First, each KPI data set is 104a,b is normalised - Figure 13 graphically illustrating the normalised version of the data set 104a and Figure 14 graphically illustrating the normalised version of the data set 104b. Figure 17 shows the same data in the form of a line plot.

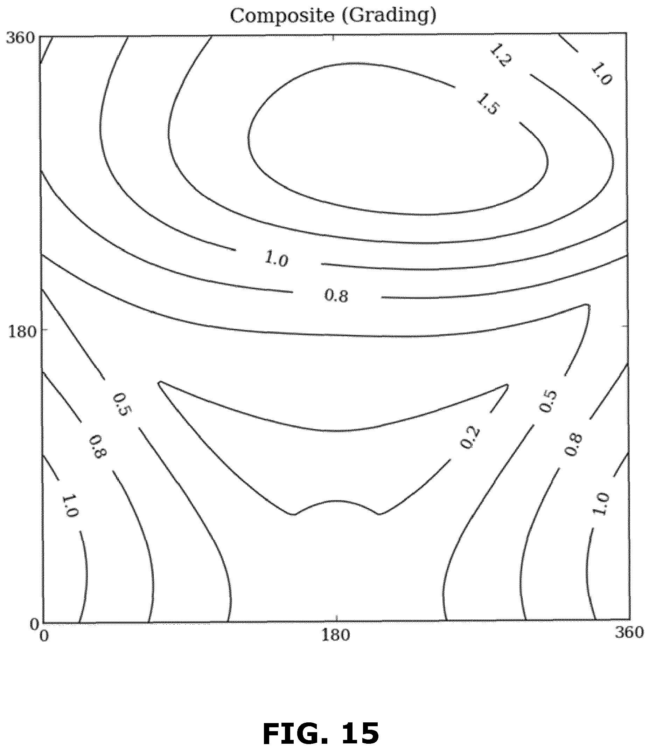

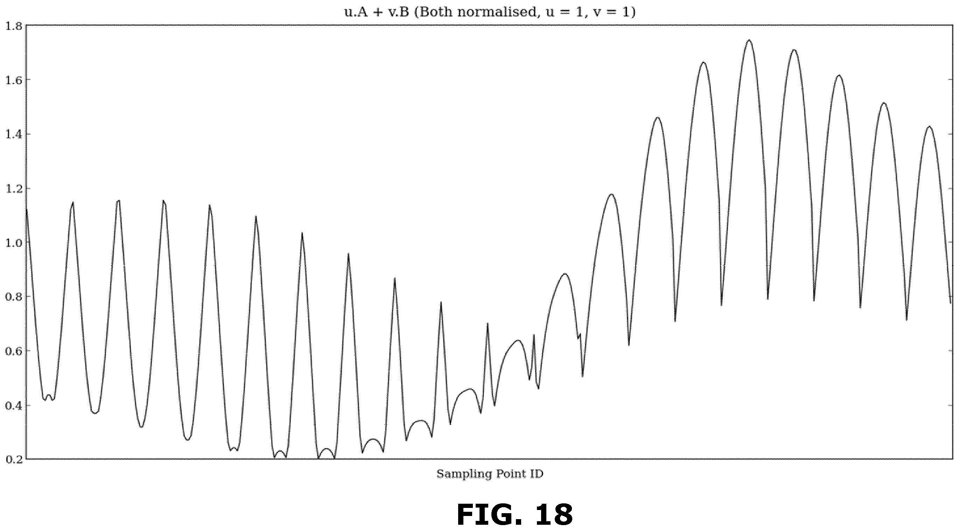

Next, the normalised data sets are merged to provide the normalised and merged composite data set 119 illustrated in Figure 15. Figure 18 shows the same data in the form of a line plot. The normalised data sets are merged with pre-defined weightings 109 from the database 110. The merging algorithm could be expressed as: (Composite = $w_1A^N + w_2B^N + ...$) where $w_1$, $w_2$ are the weightings 109, $A^N$ is the normalised version of the data set 104a, and $B^N$ is the normalised version of the data set 104b. In this example the merging algorithm is an addition of the normalised data sets, but in another example the merging algorithm may merge the normalised data sets using a product rather than an addition.

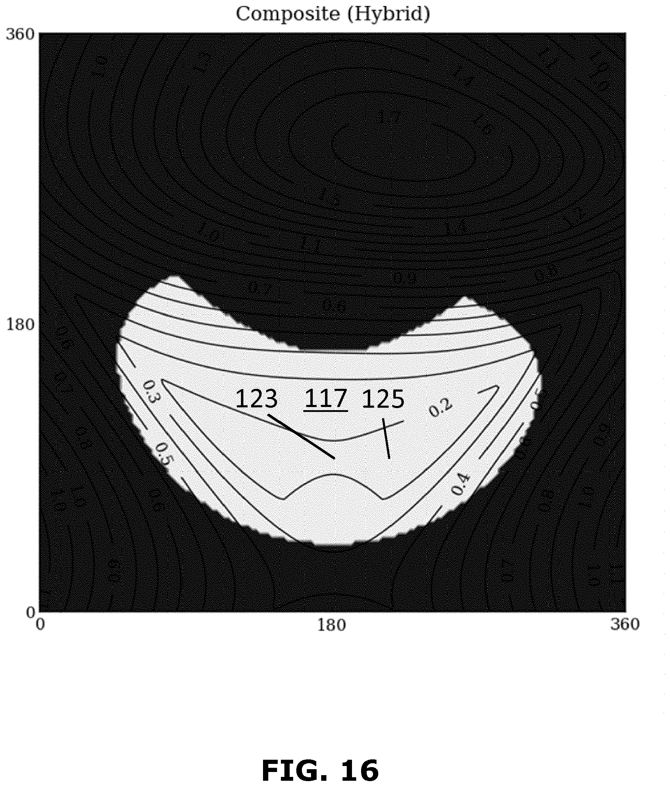

The normalised and merged composite data set 119 is then combined with the binary composite data set 118 to generate a hybrid composite data set 130. Figure 16 shows the image associated with hybrid composite data set 130, which includes a white space 117 including contour lines.

In the example of Figure 12, a composite data set 119 is generated by normalising and merging the KPI data sets 104a,b. In an alternative embodiment (not illustrated) the composite data sets 118 and 130 shown in Figure 12 may not be produced, but instead the composite data set 119 displayed as in Figure 15 and used by a user to select the solution 2.

As mentioned above, an advantage of providing the visualisation and user input steps 120, 122, 124 is that it enables a human user to apply their engineering knowledge to select a solution which may differ from that which may be determined automatically by the computer 1. Figure 16 gives an example of this. The optimal solution, based on minimising the composite KPI, is indicated at 123. However, this is fairly close to a contour line. A human user can use the visualisation to determine that this solution 123 is not appropriate, and instead choose a solution 125 which is further from the contour line and hence less sensitive.

Optionally the computer 1 can automatically pre-select an optimal build orientation by analysing the normalised and merged composite data set 119, with no initial user input. For instance the computer 1 may automatically determine a global minimum or maximum from the composite data set 119. Figure 16 gives an example of a global minimum 123 which may be displayed along with the image of Figure 16. Displaying the image of Figure 16, including an indication of the global minimum 123, enables a human user to visualise the composite data set 119 and use engineering knowledge to determine whether the global minimum 123 automatically pre-selected by the computer 1 is in fact optimal. If not, then the user can provide a user input which either accepts the pre-selected global minimum 123, or selects a different feasible build orientation 125 from the image. For example this user selection may be achieved by clicking a marker at the global minimum 123 and dragging it across to the position 125 in the image. So in this case the user either selects part of the composite data set (i.e. the position 125) or accepts a pre-selected part of the composite data set (the global minimum 123).

An advantage of displaying the image of Figure 16 is that it enables a human user to apply their engineering knowledge to select a solution which may differ from the global minimum 123 which has been determined automatically by the computer 1.

Regions of closely spaced contour lines are sensitive to perturbation in orientation. Optionally the visualisation step 120 may mathematically differentiate the composite data set 119 to produce an image 122 which directly shows the rate of change across the design space, in order to quantify sensitivity.

In further embodiments, the KPI data sets 104a,b can be formed from an algorithmic combination of other KPI data sets. An example of a KPI like this could be build time, because build time is dependent on other KPIs like build height and support structures etc.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

**Claims**

1. A method of evaluating build orientations for additively manufacturing an object (21), the method comprising: receiving geometry information (100) indicating a geometry of the object; generating multiple data sets (104a,b) from the geometry information, wherein each data set indicates variation of a respective associated performance indicator over a design space containing multiple possible build orientations; generating a composite data set (118) by combining the multiple data sets; generating a representation (120) of the composite data set, wherein the representation of the composite data set graphically illustrates variation of the composite data set over the design space; displaying an image (122) containing the representation of the composite data set; receiving a user input (124) which either selects a set of one or more of the possible build orientations or accepts a pre-selected set of one or more of the possible build orientations; and outputting a solution (2) based on the user input.

2. A method according to claim 1 wherein combining the multiple data sets comprises merging the multiple data sets or generating a logical conjunction (116) of the multiple data sets.

3. A method according to claim 2 wherein combining the multiple data sets comprises merging the multiple data sets.

4. A method according to claim 3 wherein combining the multiple data sets comprises scaling and merging the multiple data sets.

5. A method according to claim 3 wherein combining the multiple data sets comprises normalising and merging the multiple data sets.

6. A method according to any preceding claim wherein the representation of the composite data set is a bi-variate representation.

7. A method according to any preceding claim wherein the representation of the composite data set is a map.

8. A method according to any preceding claim wherein the representation of the composite data set illustrates feasible and non-feasible areas of the design space.

9. A method according to any preceding claim wherein combining the multiple data sets comprises applying a parameter to each of the multiple data sets to generate a respective plurality of modified data sets; and combining the modified data sets to generate the composite data set.

10. A method according to claim 9 wherein the parameters are thresholds, and the modified data sets indicate feasible and non-feasible areas of the design space based on the thresholds.

11. A method according to claim 10, further comprising perturbing at least one of the thresholds so that each of the modified data sets indicates at least one feasible area of the design space.

12. A method of additively manufacturing an object, the method comprising: performing the method of any preceding claim; and additively manufacturing the object in accordance with the solution.

13. A computer (1) programmed to evaluate build orientations for additively manufacturing an object by a method according to any of claims 1 to 11.

14. Additive manufacturing apparatus comprising: a computer (1) according to claim 13; and a machine (20) arranged to receive the solution from the computer and additively manufacture the object in accordance with the solution received from the computer.

15. A computer program which, when loaded into a computer, programs the computer to evaluate build orientations for additively manufacturing an object by a method according to any of claims 1 to 11.

**FIG. 1a**

**FIG. 1b**

19 — Build Data File

20

22 — Personal Computer

23 — Control System(s)

24

32

30

33 — Melting Device

Feedstock Manipulation

Feedstock

Build Platform

Inert Gas

34

31

Object

21

**FIG. 2**

**FIG. 3**

**FIG. 4a**

**FIG. 4b**

**FIG. 5**

A (Binary)

**FIG. 6**

B (Binary)

111b

**FIG. 7**

Composite (Binary)

FIG. 8

**FIG. 9**

EP 3 531 319 A1

**FIG. 10**

**FIG. 11**

Sub-tech.

Part Data File

104a

Analysis Procedure

Technology Class

Database

A

B

104b

Limit A

Logic Test

Logic Test

Limit B

A'

B'

Create Visualisation

Create Visualisation

Image

Image

Weightings

Weightings

Normalise & Merge

Logical Conjunction

116

109

117

Composite

Composite

Feas ible? *No*

119

Combine

118

Composite

130

120

Create Visualisation

Perturbation of Limits

122

Image

124

Solution Selection

**FIG. 12**

2

Solution

**FIG. 13**

FIG. 14

Composite (Grading)

**FIG. 15**

Composite (Hybrid)

**FIG. 16**

A and B (Normalised)

Sampling Point ID

**FIG. 17**

u.A + v.B (Both normalised, u = 1, v = 1)

Sampling Point ID

**FIG. 18**

Europäisches
Patentamt

European
Patent Office

Office européen
des brevets

## EUROPEAN SEARCH REPORT

Application Number

EP 19 15 8207

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/088118 A1 (ASSEMBRIX LTD [IL]) 9 June 2016 (2016-06-09) <br> * abstract * <br> * paragraph [0001] * <br> * paragraph [0004] * <br> * paragraph [0013] - paragraph [0022] * <br> * paragraph [0027] - paragraph [0035] * <br> * paragraph [0039] - paragraph [0043] * <br> * figures 4A-4C * <br> ----- | 1-15 | INV. <br> G06F17/50 |
| X | WO 2016/138344 A1 (STRATASYS INC [US]) 1 September 2016 (2016-09-01) <br> * abstract * <br> * paragraph [0005] * <br> * paragraph [0007] * <br> * paragraph [0029] * <br> * paragraph [0031] * <br> * paragraph [0033] - paragraph [0036] * <br> * paragraph [0038] * <br> * paragraph [0047] - paragraph [0049] * <br> * paragraph [0067] * <br> * paragraph [0074] * <br> ----- | 1-15 | |
| X | MOHAMMAD TAUFIK ET AL: "Role of build orientation in layered manufacturing: a review", INTERNATIONAL JOURNAL OF MANUFACTURING TECHNOLOGY AND MANAGEMENT, vol. 27, no. 1-3, 31 December 2013 (2013-12-31), pages 47-73, XP055278091, DOI: 10.1504/IJMTM.2013.058637 <br> * abstract * <br> * page 50, paragraph 1 * <br> * page 58; figure 11 * <br> * page 63; figure 15 * <br> * the whole document * <br> ----- <br> -/-- | 1-15 | TECHNICAL FIELDS SEARCHED (IPC) <br> G06F |

The present search report has been drawn up for all claims

| Place of search | Date of completion of the search | Examiner |
|---|---|---|
| Munich | 19 June 2019 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 15 8207

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S.H Masood ET AL: "A Generic Part Orientation System Based on Volumetric Error in Rapid Prototyping", International Journal of Advanced Manufacturing Technology, 1 February 2002 (2002-02-01), pages 209-216, XP055279930, London DOI: 10.1007/s001700200015 Retrieved from the Internet: URL:http://rd.springer.com/content/pdf/10.1007/s001700200015.pdf * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 19 June 2019 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 15 8207

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2019

| Patent document cited in search report | Publication date | Patent family member(s) | Publication date |
|---|---|---|---|
| WO 2016088118 A1 | 09-06-2016 | US 2017269575 A1<br>WO 2016088118 A1 | 21-09-2017<br>09-06-2016 |
| WO 2016138344 A1 | 01-09-2016 | CN 107430592 A<br>EP 3262540 A1<br>US 2016250810 A1<br>WO 2016138344 A1 | 01-12-2017<br>03-01-2018<br>01-09-2016<br>01-09-2016 |

EPO FORM P0459

For more details about this annex : see Official Journal of the European Patent Office, No. 12/82